# EUROPÄISCHE PATENTANMELDUNG

(11) **EP 4 624 257 A1**
(43) Veröffentlichungstag der Anmeldung: **01.10.2025**
(21) Anmeldenummer: 25160132.4
(22) Anmeldetag: 26.02.2025
(51) Int. Cl.: B60Q 1/48, B60Q 1/50

(54) **NUTZFAHRZEUG**

(30) Priorität: 05.03.2024 DE 102024106252
(71) Anmelder: FAUN Umwelttechnik GmbH & Co. KG, 27711 Osterholz-Scharmbeck (DE)
(72) Erfinder: Knüfermann, Peter, 46483 Wesel (DE); Bruck, Dennis, 28717 Bremen (DE)
(74) Vertreter: Regler, Markus Egid

(57) **Zusammenfassung**

Die Erfindung betrifft ein Nutzfahrzeug (1) mit einer an dem Nutzfahrzeug (1) angeordneten Arbeitseinheit sowie zumindest einer Beleuchtungseinheit (8,9,15) zum Projizieren von Lichtmarkierungen (10,11,12,17,18,19), die dazu eingerichtet ist, eine einen Arbeitsbereich des Nutzfahrzeugs (1) eingrenzende Lichtmarkierung (10,11,12,17,18,19) auf der Aufstandsfläche zu erzeugen.

Damit werden andere Verkehrsteilnehmer auf den Arbeitsbereich hingewiesen und können diesen beachten. So werden Personen- und Sachschäden vermieden.

## Beschreibung

Die Erfindung betrifft ein Nutzfahrzeug mit den Merkmalen des Schutzanspruchs 1.

Nutzfahrzeuge, wie Abfallsammelfahrzeuge, Mülltonnenwaschfahrzeuge oder Straßenreinigungsfahrzeuge, sind häufig in einem belebten Verkehrsumfeld unterwegs. Dabei kommt es immer wieder zu gefährlichen Situationen oder gar Unfällen, weil andere Verkehrsteilnehmer in den Arbeitsbereich von Nutzfahrzeugen eindringen.

Um Personenschäden zu vermeiden, ist es bekannt, beispielsweise den Arbeitsbereich von Abfallsammelfahrzeugen, wo Abfallbehälter mit Hilfe einer Hub-Kippvorrichtung geleert werden, mit einer physischen Barriere abzugrenzen. In der DE 34 05 997 A1 sind derartige Barriereelemente offenbart. Solche Barrieren sichern den Arbeitsraum allerdings nur seitlich der Schüttung ab.

Außerdem kommt es häufig vor, das Autofahrer den Arbeitsbereich von Nutzfahrzeugen im Betrieb missachten und gefährlich nahe an Arbeitseinheiten der Nutzfahrzeuge heranfahren, beispielsweise die Hub-Kippvorrichtung eines Abfallsammelfahrzeugs oder die Kehrbesen eines Straßenreinigungsfahrzeuges. Aber auch Personen, die auf dem Trittbrett eines Abfallsammelfahrzeuges mitfahren, sind gefährdet, wenn andere Fahrzeuge zu nah an ihnen vorbeifahren.

Es ist daher die Aufgabe der vorliegenden Erfindung, ein Nutzfahrzeug vorzustellen, das über Mittel verfügt, den Arbeitsraum des Nutzfahrzeugs besser abzusichern. Die Aufgabe wird gelöst durch ein Nutzfahrzug mit den Merkmalen des Schutzanspruchs 1, besondere Ausgestaltungen der Erfindung sind Gegenstand der abhängigen Ansprüche 2 bis 16.

Die Erfindung betrifft ein Nutzfahrzeug mit einer an dem Nutzfahrzeug angeordneten Arbeitseinheit sowie zumindest einer Beleuchtungseinheit zum Projizieren von Lichtmarkierungen, die dazu eingerichtet ist, eine einen Arbeitsbereich des Nutzfahrzeuges eingrenzende Lichtmarkierung auf der Aufstandsfläche zu erzeugen. Bei dem Nutzfahrzeug handelt es sich beispielsweise um ein Abfallsammelfahrzeug, ein Mülltonnenwaschfahrzeug oder ein Straßenreinigungsfahrzeug. Der Arbeitsbereich umfasst zumindest jenen Teil der Aufstandsfläche innerhalb dessen sich die jeweilige Arbeitseinheit befindet und gegebenenfalls bewegt. Im Falle eines Abfallsammelfahrzeugs handelt es sich dabei insbesondere um eine Hub-Kipp- oder Kippvorrichtung, wobei der Arbeitsbereich zumindest die Fläche umfasst, oberhalb derer sich ein Abfallbehälter während des Entleerens bewegt. Gleiches gilt für ein Mülltonnenwaschfahrzeug, bei dem die Tonnenwascheinheit die Arbeitseinheit darstellt. Bei einem Straßenreinigungsfahrzeug sind die Arbeitseinheiten beispielsweise seitlich oder frontseitig angeordnete Kehrbesen oder andere Reinigungseinheiten, wie Sprühdüsen oder Saugeinrichtungen.

Allgemeiner formuliert ist der Arbeitsbereich ein vorab definierter Bereich der Aufstandsfläche, der von der Lichtmarkierung zumindest abschnittsweise eingefasst ist.

Die Lichtmarkierung, die vorzugsweise in einer Signalfarbe, beispielsweise rot, gehalten ist, zeigt Fußgängern, Autofahrern und anderen Verkehrsteilnehmern als optischer Warnhinweis einen Gefahrenbereich an und dient gleichzeitig als Orientierung, um den notwendigen Sicherheitsabstand zum Fahrzeug aufzuzeigen. Im Gegensatz zu physischen Schranken können die Lichtmarkierungen beliebig ausgestaltet werden und nahezu beliebig rund um das Fahrzeug projiziert werden.

Auch im Straßenverkehr werden von Fußgängern häufig Smartphones benutzt, womit eine Blickrichtung zum Boden verbunden ist. Signalmarkierungen auf dem Boden können daher zusätzliche Sicherheit für Fußgänger bieten.

Vorzugsweise ist eine erste linienförmige Lichtmarkierung beabstandet von einer Seitenwand des Nutzfahrzeugs, vorzugsweise parallel zu der Seitenwand, auf dessen Aufstandsfläche projizierbar. Die erste linienförmige Lichtmarkierung ist bevorzugt in einem Abstand von bis 1000 Millimetern, besonders bevorzugt in einem Abstand von 600 ist 900 Millimetern beabstandet von der Seitenwand projizierbar.

Die erste linienförmige Lichtmarkierung erstreckt sich dabei vorzugsweise bis zum frontseitigen Ende des Aufbaus des Nutzfahrzugs und kann sich auch bis über dessen heckseitiges Ende hinaus erstrecken.

Bevorzugt ist an beiden Seiten des Fahrzeugs eine Lichtmarkierung parallel zur Seitenwand projizierbar.

Mit den ersten linienförmigen Lichtmarkierungen können beispielsweise die seitlichen Kehrbesen einer Straßenreinigungsfahrzeugs oder die Trittbretter eines Abfallsammelfahrzeugs abgesichert werden.

Weiterhin bevorzugt ist eine zweite linienförmige Lichtmarkierung heckseitig des Nutzfahrzeugs auf dessen Aufstandsfläche projizierbar. Diese zweite linienförmige Lichtmarkierung sichert die Arbeitseinheiten am Heck des Fahrzeuges ab, beispielsweise Sprühvorrichtungen für Reinigungsflüssigkeit eines Straßenreinigungsfahrzeugs oder den Hecklader eines Abfallsammelfahrzeugs. Aber auch Trittbretter können durch diese Lichtmarkierung abgesichert werden.

Besonders bevorzugt ist die zweite linienförmige Lichtmarkierung beabstandet zu der Heckwand des Nutzfahrzeugs, vorzugsweise parallel zu der Heckwand, auf dessen Aufstandsfläche projizierbar.

Alternativ umfasst die zweite linienförmige Lichtmarkierung einen kreisbogenförmigen, insbesondere halbkreisförmigen, Abschnitt, der heckseitig des Abfallsammelfahrzeugs auf dessen Aufstandsfläche projizierbar ist.

In beiden Varianten kann die zweite linienförmige Lichtmarkierung zusammen mit einer oder mehreren ersten linienförmigen Lichtmarkierungen einen zusammenhängenden Arbeitsbereich definieren, der Seitenbereiche und Heckbereich des Nutzfahrzeugs umfasst, so dass andere Verkehrsteilnehmer noch stärker auf die Gefahrenzone hingewiesen werden.

Es ist daher bevorzugt vorgesehen, dass die erste linienförmige Lichtmarkierung und die zweite linienförmige Lichtmarkierung im Wesentlichen einander überlappend projizierbar sind, so dass der Arbeitsbereich von einer als ununterbrochen wahrnehmbaren Lichtmarkierung eingefasst ist. Da die Lichtmarkierungen naturgemäß nicht immer scharf konturiert auf die Aufstandsfläche projizierbar sind und verwaschene Ränder haben können, ist es wesentlich, dass die überlappend projizierten Lichtmarkierungen als ununterbrochen wahrgenommen werden, auch wenn im Überlappungsbereich die Intensität der Projektion abnimmt. Vielmehr ist es relevant, dass der Verkehrsteilnehmer den Arbeitsbereich als solchen erkennt und berücksichtigen kann.

Eine halbkreisförmige Projektion der zweiten Lichtmarkierung ist vorzugsweise so gestaltet, dass der Radius den Abstand der ersten Lichtmarkierung von der Seitenwand mit berücksichtigt, so dass eine Überlappung der Lichtmarkierungen möglich ist.

Weiterhin bevorzugt ist zum Erzeugen einer jeden linienförmigen Lichtmarkierung eine Beleuchtungseinheit vorgesehen. Damit können die Lichtmarkierungen flexibel projiziert werden. Einzelne Beleuchtungseinheiten können abhängig vom vorgesehenen Fahrzeug und dessen Abmessungen vorteilhaft angeordnet werden.

Besonders bevorzugt ist eine Beleuchtungseinheit zum Erzeugen einer ersten linienförmigen Lichtmarkierung am oberen Endbereich einer Seitenwand des Nutzfahrzeugs angeordnet.

Weiterhin bevorzugt schließt die Mittelachse M1 des Abstrahlkegels einer Beleuchtungseinheit zum Erzeugen einer ersten linienförmigen Lichtmarkierung mit der Fahrzeughochachse H einen Winkel α von 10° bis 25° ein.

Es ist von besonderer Wichtigkeit, dass durch das von den Beleuchtungseinheiten abgestrahlte Licht andere Verkehrsteilnehme nicht geblendet oder, insbesondere bei Signalfarben, irritiert werden. In einer vorbestimmten Entfernung, insbesondere in einer Entfernung von 25 Metern, von dem Nutzfahrzeug soll das Licht nicht mehr wahrgenommen werden. Die Beleuchtungseinheiten sind daher so orientiert, dass das Licht ausschließlich in Richtung der Aufstandsfläche abgestrahlt wird.

Eine weitere Ausgestaltung der Erfindung sieht vor, dass ein Beleuchtungseinheit zum Erzeugen einer zweiten linienförmigen Lichtmarkierung am Heck des Nutzfahrzeugs oberhalb einer Arbeitseinheit angeordnet ist. Das ermöglicht eine abschattungsfreie und durchgehende Projektion der Lichtmarkierung in ausreichendem Abstand zu der Arbeitseinheit, etwa einer Hub-Kippvorrichtung, einer Tonnenwascheinheit oder einer Straßenreinigungseinheit.

Vorzugsweise schließt die Mittelachse M2 des Abstrahlkegels einer Beleuchtungseinheit zum Erzeugen einer zweiten linienförmigen Lichtmarkierung mit der Fahrzeughochachse H einen Winkel β von 25° bis 45° ein.

Auch hier besteht der Vorteil darin, dass der Abstrahlwinkel für das Licht so gewählt ist, dass der Lichtkegel in Richtung der Aufstandsfläche ausgerichtet ist.

Weiterhin ist bevorzugt vorgesehen, dass die Beleuchtungseinheiten eine oder mehrere Blenden aufweisen, um den Abstrahlkegel in Fahrzeuglängs- und/oder -querrichtung zu begrenzen. Dies bringt den Vorteil mit sich, dass die Lichtmarkierungen konturschärfer auf die Aufstandsfläche projiziert sind und das Licht nicht in unerwünschte Bereiche abgestrahlt wird.

Insbesondere sind die Blenden so eingerichtet sind, dass in einer vorbestimmten Entfernung vom Nutzfahrzeug kein abgestrahltes Licht mehr wahrnehmbar ist. Dadurch wird vermieden, dass andere Verkehrsteilnehmer durch das abgestrahlte Licht geblendet oder irritiert werden.

Vorzugsweise sind eine oder mehrere Blenden einer Beleuchtungseinheit bezüglich des Abstrahlkegels variabel einstellbar. Dadurch können die Lichtmarkierungen präzise ausgerichtet werde. Auch nach einem Umbau oder einer Wartung können die Beleuchtungseinheiten wieder so eingestellt werden, dass die Lichtmarkierungen wie vorgesehen projizierbar sind. Auch eine Änderung, beispielsweise des Abstands der Lichtmarkierung von einer Seitenwand des Nutzfahrzeugs, ist einfach zu bewerkstelligen.

Die Blenden einer Beleuchtungseinheit können auch unabhängig voneinander einstellbar sein, um die Projektion der Lichtmarkierungen zu verbessern.

Weiterhin ist es möglich, dass die Blenden der Beleuchtungseinheiten automatisiert beweglich ausgestaltet sind. Insbesondere können bestimmte Blendeneinstellungen vorgesehen sein, um beispielsweise die ersten linienförmigen Lichtmarkierungen in unterschiedlichen Abständen zur Seitenwand des Fahrzeugs zu projizieren, wobei die Einstellungen je nach Arbeitsmodus des Fahrzeugs gewählt werden können.

Weiterhin bevorzugt sind die Beleuchtungseinheiten nur aktivierbar, wenn sich das Nutzfahrzeug in einem Arbeitsmodus befindet. Im Falle von Abfallsammelfahrzeugen bedeutet der Arbeitsmodus beispielsweise, dass der Sammelbetrieb, insbesondere manuell, gestartet wurde oder dass das Trittbrett besetzt ist. Bei Straßenreinigungsmaschinen würde das bedeuten, dass der Kehraufbau, insbesondere manuell, aktiviert wurde. Die Beleuchtungseinrichtungen sind also dann aktiv, wenn konkrete Gefahrenpotentiale vorhanden sind und die übrigen Verkehrsteilnehmer auf die Arbeitsbereiche hingewiesen werden sollen. Bei Überführungsfahrten ist die Beleuchtung nicht notwendig und kann andere Verkehrsteilnehmer sogar unnötig irritieren.

Weiterhin bevorzugt sind die Beleuchtungseinheiten nur aktivierbar, wenn sich das Nutzfahrzeug mit einer Geschwindigkeit von 0 km/h bis 30 km/h bewegt. Dadurch ist zudem gewährleistet, dass die Lichtmarkierungen nur projizierbar sind, wenn die Notwendigkeit dafür besteht, so dass eine unnötige Beeinflussung der übrigen Verkehrsteilnehmer nicht erfolgt.

Je nach Einsatzzweck und Arbeitsmodus können die erlaubten Geschwindigkeitsintervalle variabel gewählt werden.

Bei Abfallsammelfahrzeugen oder Mülltonnenwaschfahrzeugen sind die Beleuchtungseinheiten insbesondere nur dann aktivierbar, wenn der Sammelbetrieb gestartet ist und sich das Abfallsammelfahrzeug mit einer Geschwindigkeit von 0 km/h bis 9 km/h bewegt.

Alternativ sind bei Abfallsammelfahrzeugen oder Mülltonnenwaschfahrzeugen sind die Beleuchtungseinheiten insbesondere nur dann aktivierbar, wenn zumindest ein Trittbrett besetzt ist und sich das Abfallsammelfahrzeug mit einer Geschwindigkeit von 0 km/h bis 30 km/h bewegt.

Bei Straßenreinigungsfahrzeugen sind die Beleuchtungseinheiten insbesondere nur dann aktivierbar, wenn der Kehraufbau aktiviert ist und sich das Abfallsammelfahrzeug mit einer Geschwindigkeit von 0 km/h bis 30 km/h bewegt.

Weiter Merkmale der Erfindung ergeben sich aus den in den Figuren und der nachfolgenden zugehörigen Beschreibung erläuterten Ausführungsbeispielen.

Es zeigen:
- Figur 1: ein Abfallsammelfahrzeug in Seitenansicht,
- Figur 2: ein Abfallsammelfahrzug in Draufsicht,
- Figur 3: ein Abfallsammelfahrzug in Heckansicht,
- Figur 4: ein Abfallsammelfahrzeug in Draufsicht, mit einer ersten Variante erfindungsgemäßer Lichtmarkierungen,
- Figur 5: ein Abfallsammelfahrzeug in Draufsicht, mit einer zweiten Variante erfindungsgemäßer Lichtmarkierungen,
- Figur 6: ein Abfallsammelfahrzeug in Draufsicht, mit einer dritten Variante erfindungsgemäßer Lichtmarkierungen,
- Figur 7: ein Abfallsammelfahrzeug in Draufsicht, mit einer vierten Variante erfindungsgemäßer Lichtmarkierungen,
- Figur 8: ein Abfallsammelfahrzeug in Draufsicht, mit einer fünften Variante erfindungsgemäßer Lichtmarkierungen,
- Figur 9: ein Abfallsammelfahrzeug in Draufsicht, mit einer sechsten Variante erfindungsgemäßer Lichtmarkierungen.

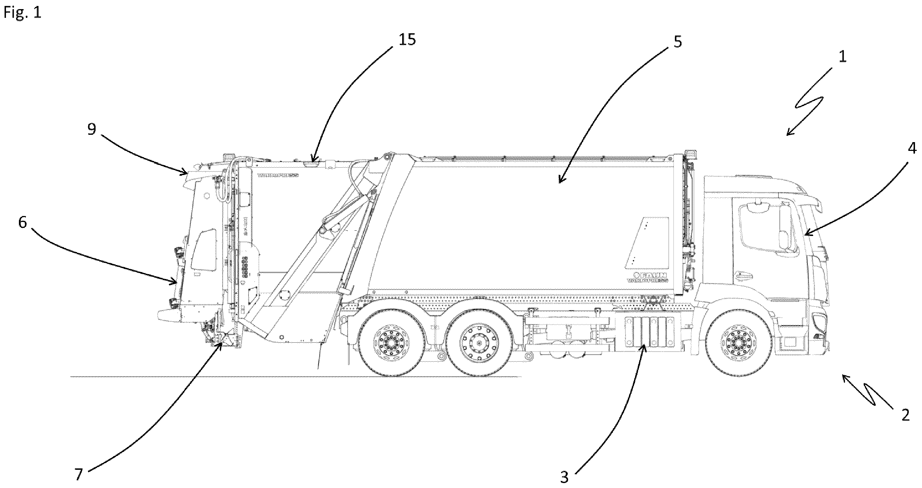

Das in Fig. 1 in Seitenansicht dargestellte Abfallsammelfahrzeug 1 als Beispiel für ein Nutzfahrzeug verfügt über ein Chassis 2 mit Fahrgestell 3 und Fahrerkabine 4, einen Sammelcontainer 5 sowie über ein Heckteil mit einer Hub-Kippvorrichtung 6. Weiterhin sind Trittbretter 7 vorgesehen, die hier in hochgeklapptem Zustand abgebildet sind.

Die Hub-Kippvorrichtung 6 weist Aufnahmen auf, in denen Abfallbehälter eingehängt werden. Die Hub-Kippvorrichtung 6 hebt die Abfallbehälter an und entleert diese in den Sammelcontainer 5. Dabei fällt der Abfall üblicherweise in eine Wanne und wird mit Hilfe eines Kompaktierungsmechanismus komprimiert und in den Sammelcontainer 5 befördert. Bewegen sich Personen in diesen Arbeitsbereich an der Heckseite des Abfallsammelfahrzeugs 1 hinein, besteht die Gefahr, dass sie von einem - häufig automatisch - entleerten Abfallbehälter getroffen und verletzt werden. Zum Arbeitsbereich gehören auch die Bereiche seitlich des Heckteils, wo sich Müllwerker bewegen, um die Abfallbehälter heranzuschieben, oder wo Müllwerker auf dem Trittbrett 7 während des Sammelbetriebs mitfahren. Häufig fahren Autofahrer zu nahe an das Abfallsammelfahrzeug 1 heran und gefährden damit das Personal auf den Trittbrettern 7 oder kollidieren sogar mit Teilen der Hub-Kippvorrichtung 6 und beschädigen diese.

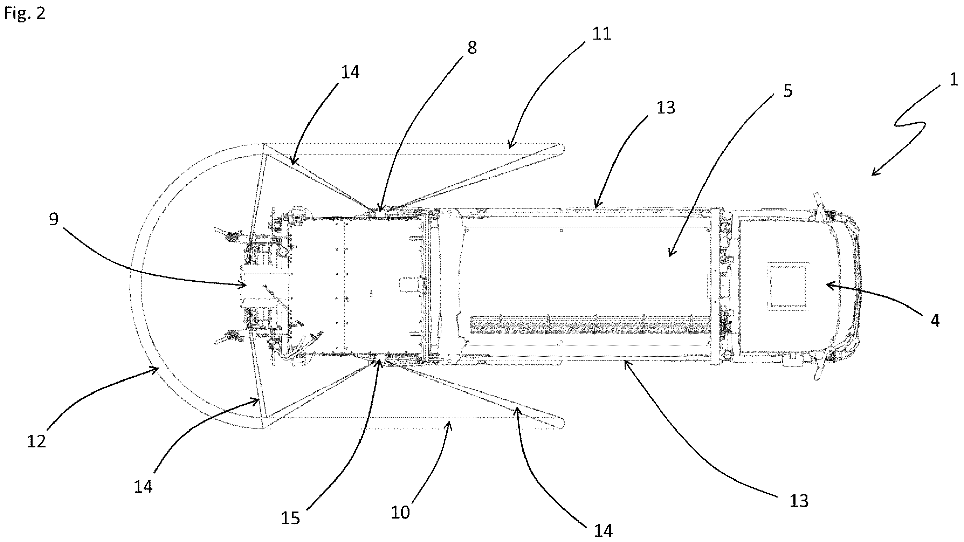

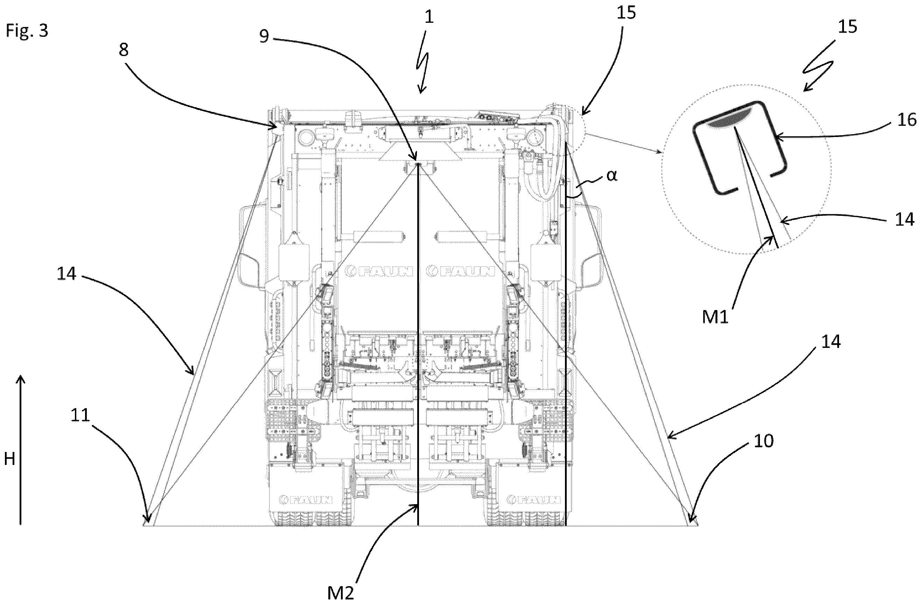

Um die Gefahr eines wie auch immer gearteten Unfalls zu vermindern, verfügt das Abfallsammelfahrzeug 1 über Beleuchtungseinheiten 8,9,15 zum Projizieren von Lichtmarkierungen 10,11,12, womit Lichtmarkierungen 10,11,12 auf der Aufstandsfläche des Abfallsammelfahrzeugs 1 erzeugt werden (siehe Fig. 2 und 3).

Zwei Beleuchtungseinheiten 8,15 sind an einem oberen Ende der Seitenwände 13 des Abfallsammelfahrzeugs 1 angeordnet und zwar im Bereich des heckseitigen Endes des Aufbaus. Das von diesen ersten Beleuchtungseinheiten 8,15 abgestrahlte Licht ist mittels Blenden 16 auf die Aufstandsfläche gerichtet, so dass der Abstrahlkegel 14 begrenzt ist. Das bewirkt, dass in einem vorgesehenen horizontalen Abstand von dem Abfallsammelfahrzeug 1 kein von der Beleuchtungseinheit 8 abgestrahltes Licht mehr wahrnehmbar ist. Dadurch wird vermieden, dass andere Verkehrsteilnehmer durch das signalrote Licht der Beleuchtungseinheiten 8,15 geblendet oder irritiert werden. Das ist insbesondere wichtig, weil die von der Beleuchtungseinheit 8,15 projizierte Lichtmarkierung 10,11 in signalrot gehalten ist.

Von den Beleuchtungseinheiten 8,15 wird eine erste linienförmige Lichtmarkierung 10,11 auf den Boden projiziert. Sie verläuft parallel in einem Abstand von etwa 850 Millimetern zur jeweiligen Seitenwand 13 und erstreckt sich vom heckseitigen Ende des Aufbaus des Abfallsammelfahrzeugs 1 bis in die vordere Hälfte des Aufbaus.

Eine dritte Beleuchtungseinheit 9 ist oberhalb der Hub-Kippvorrichtung 6 angeordnet. Durch diese Beleuchtungseinheit 9 wird eine zweite linienförmige Lichtmarkierung 12 in Form eines Halbkreises projiziert. Der Radius des Halbkreises entspricht der Summe der halben Heckbreite des Abfallsammelfahrzeugs 1 und des Abstands der ersten linienförmigen Lichtmarkierungen 10,11 von der Seitenwand 13.

Auch hier ist eine Blende 16 an der Beleuchtungseinheit 9 vorgesehen, um den Lichtkegel 14 zu begrenzen und unerwünschte Abstrahlung in die Umgebung zu vermeiden.

Die zweite linienförmige Lichtmarkierung 12 und die beiden ersten linienförmigen Lichtmarkierungen 10,11 überlappen sich in ihren Endbereichen und fassen so den gesamten Arbeitsbereich ein, der sich vom Heckbereich des Abfallsammelfahrzeugs 1 an dessen Seitenwänden 13 entlang bis fast zum frontseitigen Ende des Sammelcontainers 5 erstreckt.

Die konkrete Ausdehnung des so markierten Arbeitsbereichs ist prinzipiell frei wählbar. Bei als Heckladern ausgestalteten Abfallsammelfahrzeugen1 sollte der Arbeitsbereich zumindest die Fläche vor dem Heck des Abfallsammelfahrzeugs 1 umfassen, oberhalb derer sich der Abfallbehälter während des Entleerens bewegt. Das ist der unmittelbare Gefahrenbereich. Die Lichtmarkierungen 10,11,12 können aber auch in größerer Distanz zu dem Abfallsammelfahrzeug 1 projiziert werden, um beispielsweise auch den Bereich abzudecken, in dem Müllwerker Abfallbehälter zur Entleerung bereitstellen. Zudem können die Beleuchtungseinheiten 8,9 auch positionsflexibel gehalten werden, um beispielsweise nach einem Wechsel der Hub-Kippvorrichtung 6 die Geometrie der neuen Vorrichtung zu berücksichtigen, um eine Projektion der Lichtmarkierungen 8,9 ohne Abschattungen zu ermöglichen.

Die Lichtmarkierungen 10,11,12 weisen Fußgänger, Radfahrer und Autofahrer auf die Gefahrenbereiche hin und geben den sich ebenfalls auf der Straße bewegenden Verkehrsteilnehmern eine Orientierung, damit diese in ausreichendem Sicherheitsabstand an dem Abfallsammelfahrzeug 1 vorbeifahren können.

Fig. 3 zeigt ein Abfallsammelfahrzeug 1 in der Heckansicht. Die dort vergrößert gezeigte Beleuchtungseinheit 15 projiziert eine erste linienförmige Lichtmarkierung 10 auf die Aufstandsfläche des Abfallsammelfahrzeugs 1. Der vergrößerte Ausschnitt zeigt, dass der Abstrahlkegel 14 durch eine Blende 16 begrenzt wird. Außerdem ist die Beleuchtungseinheit 15 so ausgerichtet, dass die Mittelachse M1 des Abstrahlkegels 14 mit der Fahrzeughochachse H einen Winkel α einschließt, der je nach Anbauhöhe der Beleuchtungseinheit 15 von 10° bis 25° beträgt. Damit wird zusammen mit der Blende 16 erreicht, dass das abgestrahlte Licht andere Verkehrsteilnehmer nicht blendet oder irritiert.

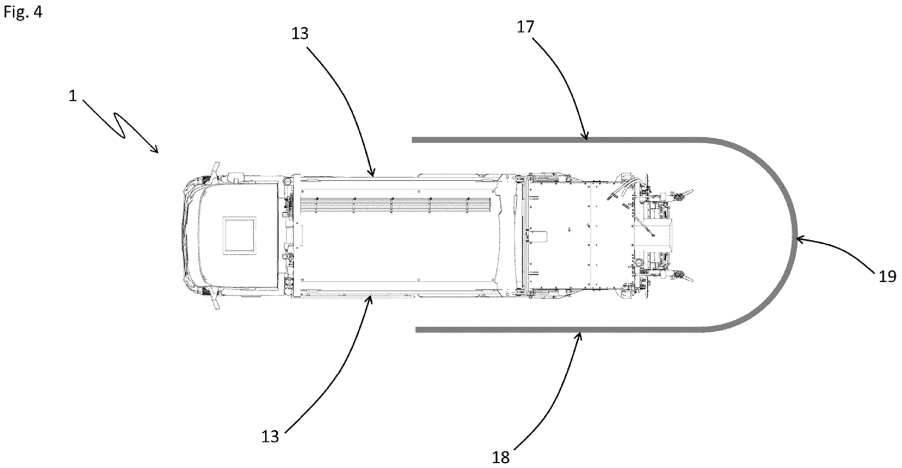

Die Fig. 4 bis 9 zeigen verschiedene Varianten der Lichtmarkierungen 17,18,19 am Beispiel eines Abfallsammelfahrzeugs 1. Diese Markierungen 17,18,19 können in analoger Weise auch bei einem Straßenreinigungsfahrzeug oder Mülltonnenwaschfahrzeug oder anderen Nutzfahrzeugen zweckmäßig realisiert werden. Auch bei als Frontlader oder Seitenlader ausgestalteten Abfallsammelfahrzeugen 1 können darauf angepasste Lichtmarkierungen 17,18,19 umgesetzt werden.

In Fig. 4 ist ein Abfallsammelfahrzeug 1 dargestellt. In dieser ersten Variante werden zwei erste linienförmige Lichtmarkierungen 17,18 zu beiden Seiten des Abfallsammelfahrzeuges 1 parallel zu dessen Seitenwänden 13 projiziert. Ergänzt wird die Beleuchtung durch eine halbkreisförmige zweite linienförmige Lichtmarkierung 19, die den heckseitigen Arbeitsraum an der dort angeordneten Hub-Kippvorrichtung 6 umgibt.

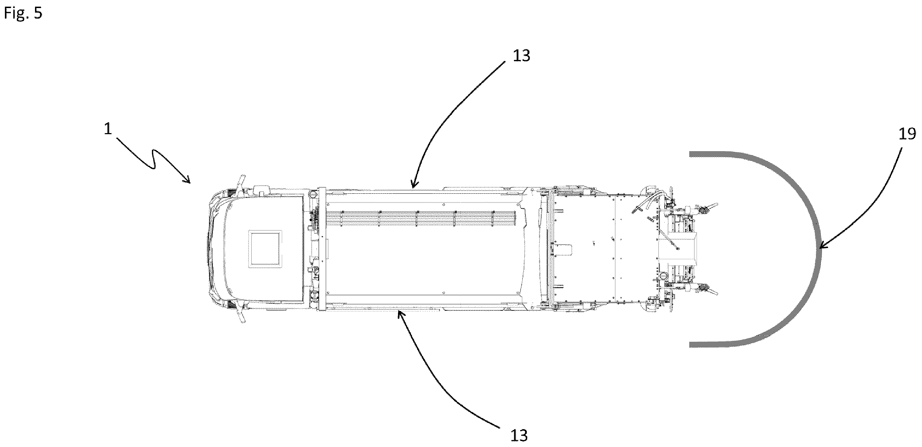

In der in Fig. 5 dargestellten zweiten Variante wird lediglich eine zweite linienförmige Lichtmarkierung 19 in Halbkreisform projiziert.

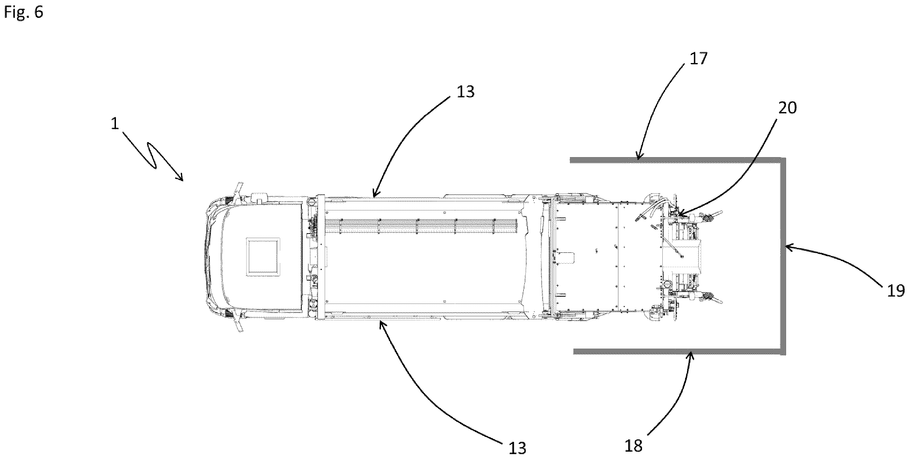

In der dritten Variante gemäß Fig. 6 ist der von der Beleuchtung eingeschlossene Arbeitsbereich rechteckig ausgestaltet. Wiederum werden zwei erste linienförmige Lichtmarkierungen 17,18 zu beiden Seiten des Abfallsammelfahrzeuges 1 parallel zu dessen Seitenwänden 13 projiziert. Die zweite linienförmige Lichtmarkierung 19 wird hingegen parallel zu der Heckwand 20 des Abfallsammelfahrzeugs projiziert, so dass sich zusammen mit den ersten Lichtmarkierungen 17,18 ein Rechteck ergibt.

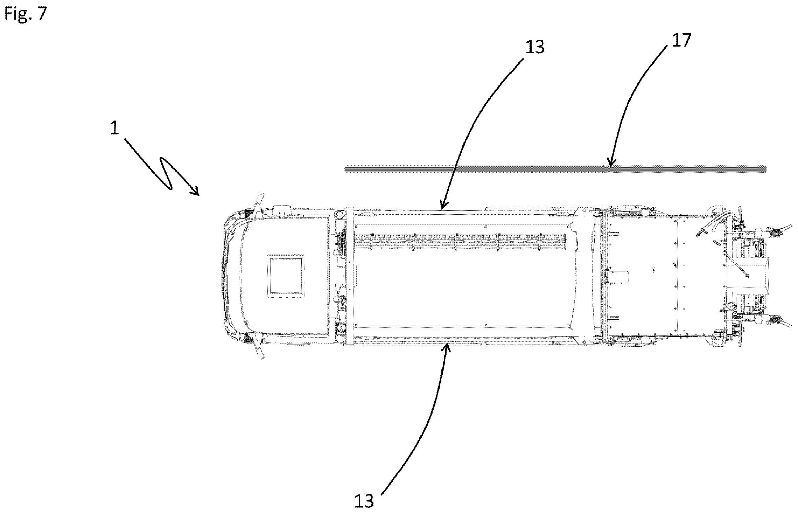

In der in Fig. 7 konkret dargestellten vierten Variante ist nur eine erste linienförmige Lichtmarkierung 17 projiziert. Die Lichtmarkierung 17 dient insbesondere dazu, Passanten oder Radfahrer auf Fuß- oder Radwegen davon abzuhalten, sich dem Abfallsammelfahrzeug 1 von dort zu nähern. Die Warnlinie erstreckt sich über sie komplette Seite des Aufbaus bis hin zu der Hub-Kippvorrichtung 6.

Diese Ausgestaltung ist insbesondere auch für Straßenreinigungsfahrzeugen zweckmäßig, deren Arbeitsbereiche üblicherweise an den Seiten des Fahrzeuges liegen, wo Kehrbesen zum Reinigen der Straße und der Regenrinnen angeordnet sind. Weitere mögliche Arbeitsbereiche sind Front- oder Heckbereich, wo Düsen zum Versprühen von Reinigungsflüssigkeit und Saugeinrichtungen zum Aufnehmen von Schmutz und Flüssigkeit angeordnet sein können.

Bei Straßenreinigungsfahrzeugen befindet sich an den Seiten des Fahrzeugs, zumeist kurz hinter der Fahrerkabine der Kehrbesen, dessen rotierende Bewegung im Betrieb gefährlich für andere Verkehrsteilnehmer sein können. Daher ist die erste linienförmige Lichtmarkierung, die parallel zu der Seitenwand des Straßenreinigungsfahrzeugs projiziert ist, vorgesehen, um Fußgänger oder Radfahrer auf besonders auf diesen Gefahrenbereich hinzuweisen.

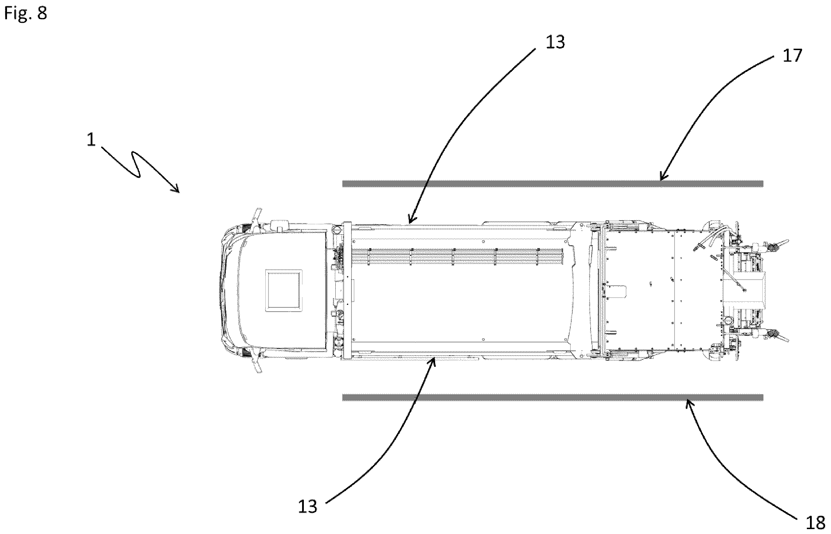

In Fig. 8 sind gemäß einer fünften Variante der Erfindung zwei linienförmige Lichtmarkierungen 17,18 an beiden Seiten des Abfallsammelfahrzeugs 1 vorgesehen. Hier gilt in ebenfalls das zu Fig. 7 ausgeführte. In Bezug auf

Straßenreinigungsfahrzeuge ist diese Variante zweckmäßig, wenn an beiden Seiten des Fahrzeugs Kehrbesen angeordnet sind. Dann wird auch der Arbeitsbereich, der der Fahrbahnseite zugewandt ist, markiert, so dass auch Autofahrer, die das Fahrzeug passieren, auf diesen Arbeitsbereich aufmerksam gemacht werden.

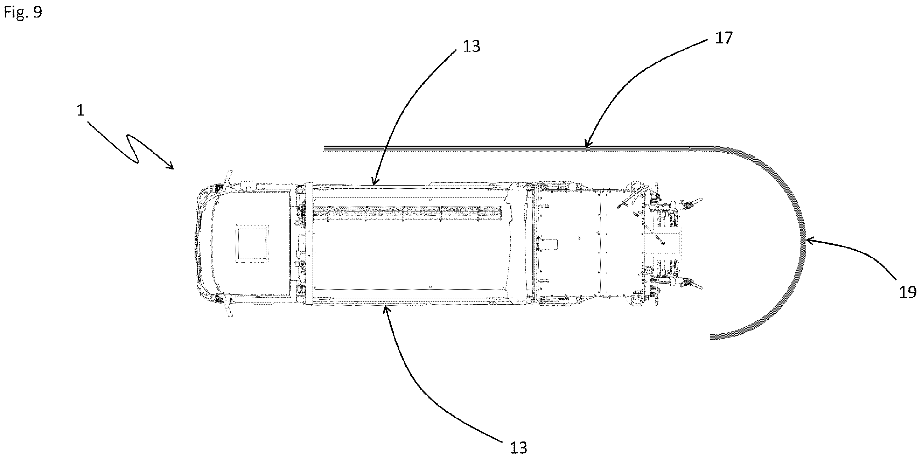

In einer sechsten Variante gemäß Fig. 9 ist eine ersten Lichtmarkierung 17 wie in Fig. 7 mit einer halbkreisförmigen zweiten linienförmigen Lichtmarkierung 19 am Heck des Fahrzeugs kombiniert. Bei einem Abfallsammelfahrzeug 1 ist damit der Arbeitsbereich an der Seite des Fahrzeugs 1, wo sich das Trittbrett befindet und wo auch Abfallbehälter bereitgestellt werden zusammen mit dem Heckbereich mit den Lichtmarkierungen 17,19 umfasst.

Bei Straßenkehrfahrzeugen wäre neben dem Arbeitsbereich mit dem Kehrbesen zusätzlich eine heckseitig angeordnete Sprüh- und Saugvorrichtung als Arbeitsbereich einbezogen.

Die Figuren 4 bis 9 zeigen die Variabilität der Ausgestaltungen der Lichtmarkierungen 10,11,12,17,18,19, um den Arbeitsbereich der Nutzfahrzeuge einzugrenzen. Es ist klar, dass die einzelnen gezeigten Varianten und darüber hinaus weitere Varianten für jede Art von Nutzfahrzeug angewendet werden können. Insbesondere kann die Ausgestaltung der Lichtmarkierungen 10,11,12,17,18,19 an den jeweiligen Arbeitsbereich angepasst werden und zudem zweckmäßig gewählt werden.

Es ist auch möglich, mehrere Beleuchtungseinheiten 8,9,15 vorzusehen und je nach Bedarf zu aktivieren und zu deaktivieren, so dass je nach Verkehrssituation und Arbeitsmodus unterschiedliche Varianten der Lichtmarkierungen 10,11,12,17,18,19 projiziert werden. Beispielsweise werden bei einem Abfallsammelfahrzeug 1 während einer kurzen Fahrt von einem Abfallbehälter zum nächsten nur die ersten linienförmigen Lichtmarkierungen 10,11,17,18 an den Seiten des Abfallsammelfahrzeugs 1 projiziert. Dadurch wird das Personal auf den Trittbrettern während der kurzen Fahrt besser geschützt. Sobald die Entleerung der Abfallbehälter beginnt, wird zusätzlich eine zweite linienförmige Lichtmarkierung 12,19 projiziert, um den heckseitigen Arbeitsbereich zusätzlich zu markieren. Weitere derartige Varianten sind selbstverständlich ebenso möglich.

### Bezugszeichen

- 1: Abfallsammelfahrzeug
- 2: Chassis
- 3: Fahrwerk
- 4: Fahrerkabine
- 5: Sammelcontainer
- 6: Hub-Kippvorrichtung
- 7: Trittbrett
- 8: Beleuchtungseinheit
- 9: Beleuchtungseinheit
- 10: erste linienförmige Lichtmarkierung
- 11: erste linienförmige Lichtmarkierung
- 12: zweite linienförmige Lichtmarkierung
- 13: Seitenwand von 1
- 14: Abstrahlkegel
- 15: Beleuchtungseinheit
- 16: Blende
- 17: erste linienförmige Lichtmarkierung
- 18: erste linienförmige Lichtmarkierung
- 19: zweite linienförmige Lichtmarkierung
- 20: Heckwand von 1
- H: Fahrzeughochachse
- M1: Mittelachse von 14
- M2: Mittelachse von 14
- α: Winkel

## Patentansprüche

1. Nutzfahrzeug (1) mit einer an dem Nutzfahrzeug (1) angeordneten Arbeitseinheit sowie zumindest einer Beleuchtungseinheit (8,9,15) zum Projizieren von Lichtmarkierungen (10,11,12,17,18,19), die dazu eingerichtet ist, eine einen Arbeitsbereich des Nutzfahrzeugs (1) eingrenzende Lichtmarkierung (10,11,12,17,18,19) auf der Aufstandsfläche zu erzeugen.

2. Nutzfahrzeug (1) nach Anspruch 1 **dadurch gekennzeichnet, dass** eine erste linienförmige Lichtmarkierung (10,11,17,18) beabstandet von einer Seitenwand (13) des Nutzfahrzeugs (1), vorzugsweise parallel zu der Seitenwand (13), auf dessen Aufstandsfläche projizierbar ist.

3. Nutzfahrzeug (1) nach Anspruch 1 oder 2 **dadurch gekennzeichnet, dass** eine zweite linienförmige Lichtmarkierung (12,19) heckseitig des Nutzfahrzeugs (1) auf dessen Aufstandsfläche projizierbar ist.

4. Nutzfahrzeug (1) nach Anspruch 3 **dadurch gekennzeichnet, dass** die zweite linienförmige Lichtmarkierung (12,19) beabstandet zu der Heckwand (20) des Nutzfahrzeugs (1), vorzugsweise parallel zu der Heckwand (20), auf dessen Aufstandsfläche projizierbar ist.

5. Nutzfahrzeug (1) nach Anspruch 3 **dadurch gekennzeichnet, dass** die zweite linienförmige Lichtmarkierung (12,19) einen kreisbogenförmigen, insbesondere halbkreisförmigen, Abschnitt umfasst, der heckseitig des Nutzfahrzeugs (1) auf dessen Aufstandsfläche projizierbar ist.

6. Nutzfahrzeug (1) nach zumindest einem der Ansprüche 3 bis 5 **dadurch gekennzeichnet, dass** die erste linienförmige Lichtmarkierung (10,11,17,18) und die zweite linienförmige Lichtmarkierung (12,19) im Wesentlichen einander überlappend projizierbar sind, so dass der Arbeitsbereich von einer als ununterbrochen wahrnehmbaren Lichtmarkierung (10,11,12,17,18,19) eingefasst ist.

7. Nutzfahrzeug (1) nach zumindest einem der vorstehenden Ansprüche **dadurch gekennzeichnet, dass** zum Erzeugen einer jeden linienförmigen Lichtmarkierung (10,11,12,17,18,19) eine Beleuchtungseinheit (8,9,15) vorgesehen ist.

8. Nutzfahrzeug (1) nach Anspruch 7 **dadurch gekennzeichnet, dass** eine Beleuchtungseinheit (8,15) zum Erzeugen einer ersten linienförmigen Lichtmarkierung (10,11,17,18) am oberen Endbereich einer Seitenwand (13) des Nutzfahrzeugs (1) angeordnet ist.

9. Abfallsammelfahrzeug nach Anspruch 7 oder 8 **dadurch gekennzeichnet, dass** die Mittelachse M1 des Abstrahlkegels (14) einer Beleuchtungseinheit (8,15) zum Erzeugen einer ersten linienförmigen Lichtmarkierung (10,11,17,18) mit der Fahrzeughochachse H einen Winkel α von 10° bis 25° einschließt.

10. Nutzfahrzeug (1) nach zumindest einem der Ansprüche 7 bis 9 **dadurch gekennzeichnet, dass** ein Beleuchtungseinheit (9) zum Erzeugen einer zweiten linienförmigen Lichtmarkierung (12,19) am Heck des Nutzfahrzeugs (1) oberhalb einer Arbeitseinheit (6,22,24) angeordnet ist.

11. Nutzfahrzeug (1) nach zumindest einem der Ansprüche 7 bis 10 **dadurch gekennzeichnet, dass** die Mittelachse M2 des Abstrahlkegels (14) einer Beleuchtungseinheit (9) zum Erzeugen einer zweiten linienförmigen Lichtmarkierung (12,19) mit der Fahrzeughochachse H einen Winkel β von 25° bis 45° einschließt.

12. Nutzfahrzeug (1) nach zumindest einem der vorstehenden Ansprüche **dadurch gekennzeichnet, dass** die Beleuchtungseinheiten (8,9,15) eine oder mehrere Blenden (16) aufweisen, um den Abstrahlkegel (14) in Fahrzeuglängs- und/oder - querrichtung zu begrenzen.

13. Nutzfahrzeug (1) nach Anspruch 12 **dadurch gekennzeichnet, dass** die Blenden (16) so eingerichtet sind, dass in einer vorbestimmten Entfernung vom Nutzfahrzeug (1) kein abgestrahltes Licht mehr wahrnehmbar ist.

14. Nutzfahrzeug (1) nach Anspruch 12 oder 13 **dadurch gekennzeichnet, dass** eine oder mehrere Blenden (16) einer Beleuchtungseinheit (8,9,15) bezüglich des Abstrahlkegels (14) variabel einstellbar sind.

15. Nutzfahrzeug (1) nach zumindest einem der vorstehenden Ansprüche **dadurch gekennzeichnet, dass** die Beleuchtungseinheiten (8,9,15) nur aktivierbar sind, wenn sich das Nutzfahrzeug (1) in einem Arbeitsmodus befindet.
